# EUROPEAN PATENT SPECIFICATION

(11) **EP 0 340 882 B1**
(45) Date of publication and mention of the grant of the patent: **13.10.1993**
(21) Application number: 89300018.2
(22) Date of filing: 04.01.1989
(51) Int. Cl.: G11B 5/39

(54) **Thin film magnetic data transducer**
Dünnschichtmagnetkopf
Tête magnétique à couches minces

(30) Priority: 25.04.1988 US 185636
(43) Date of publication of application: 08.11.1989
(73) Proprietor: SEAGATE TECHNOLOGY INTERNATIONAL, Georgetown, Grand Cayman Island (KY)
(72) Inventor: Mowry, Gregory Stephen, Burnsville Minnesota 55337 (US)
(74) Representative: Miller, Joseph

(56) References cited:
- PATENT ABSTRACTS OF JAPAN, vol. 11, no. 173 (P-582)(2620), 4 June 1987; & JP-A-62 3414
- PATENT ABSTRACTS OF JAPAN, vol. 11, no. 137 (P-572)(2584), 2 May 1987; & JP-A-61 276110
- PATENT ABSTRACTS OF JAPAN, vol. 10, no. 344 (P-518)(2400), 20 November 1986; & JP-A-61 145 718
- PATENT ABSTRACTS OF JAPAN, vol. 10, no. 64 (P-436)(2121), 14 March 1986; & JP-A-60 205811
- IEEE TRANSACTIONS ON MAGNETICS, vol. MAG-18, no. 6, November 1982, pages 1149-1151; C. TSANG et al.: "Fabrication and wafer testing of barber-pole and exchange-biased narrow-track mr sensors"
- JOURNAL OF APPLIED PHYSICS, vol. 57, no. 12, 15 June 1985, page 5406; E.J. OZIMEK: "Characteristics length of domain structures and its effect on the coercive force of feromagnetic materials"

## Description

This invention relates to thin film magnetic data transducers.

In modern magnetic data storage systems, actual recording of data is invariably done by a magnetic transducer which converts an electrical signal into changing magnetic flux patterns at a flux gap of the transducer and adjacent a medium in which intricate magnetic patterns may be created. The changing magnetic flux patterns change the local magnetic state of the medium into a pattern in the medium which persists until over-written. The pattern in the medium can be sensed or read by a variety of devices to create an electrical signal representative of the pattern in the medium and from which the original data can be recreated.

Photo-lithographic processes can be used to form such transducers, and those so formed are referred to as thin film transducers. Such transducers are built up through deposition layer by layer in great numbers simultaneously on a wafer which is then cut into individual carriers, each having one or two transducers Each individual carrier then has a bearing surface along which the medium moves, and which is created by the cutting step. These transducers have at least one deposited pole of pre-selected width projecting towards and approximately flush with the bearing surface of the transducer. The pole defines a flux gap across which is formed the magnetic field for writing the magnetic pattern in the medium. A deposited winding encircling the pole carries write current for generating the write flux across the flux gap. If only a single pole is deposited for a transducer, then the carrier is formed of a magnetic ferrite and forms the other pole. Of course, it is possible to deposit two or more poles, and the flux gap for writing is then formed between them. In this case, the carrier may be formed from magnetic or non-magnetic material depending on the configuration.

One type of sensor for reading data encoded in previously written magnetic data patterns on the medium is a so-called magneto-resistive flux sensing element underlying the deposited pole. Such an element has the special characteristic of electrical resistance which is a function of the impressed magnetism to which such a sensor is exposed. The magneto-resistive sensing element has advantages and disadvantages for this application. One of the advantages is that the sensor must be carefully constructed so that it comprises a single domain in the area where the medium's magnetic pattern is sensed, thereby avoiding Barkhausen noise which is otherwise generated. The Barkhausen noise problem requires careful design of these sensors to allow their proper functioning to sense magnetic patterns. To prevent the break up of these sensors into a plurality of magnetic domains, among other things it is known to be necessary for the sensing element to physically have relatively straight edges and sides with no sharp angles since these can induce the sensor to break up into domains. These problems are considered in various discussions of magneto-resistive elements, among these being "Characteristic Length of Domain Structure and Its Effect on the Coercive Force of Ferromagnetic Materials", E. J. Ozimek, J.A.P. 57 (12), 15 June 1985, page 5406 and "Fabrication and Wafer Testing of Barber Pole and Exchange-Biased Narrow Track MR Sensors", IEEE Transactions on Magnetics, Vol. Mag 18, Nov. 1982, pp. 1149 - 1151.

It is important that the sensor is located as close as possible to the medium and the magnetic patterns in it since these are relatively weak and their field drops off quickly with distance. Because of the single domain requirement and because of the way in which these composite transducers are manufactured, it is preferred that the sensing element is recessed slightly from the edge of the carrier on which the sensor and transducer are mounted. Recessing is needed to permit the write transducer flux gap to be configured to a particular range of dimensions, for example, by a lapping process, and if the sensing element is not sufficiently recessed, the sensing element can be scratched by the lapping process. These scratches may induce the sensor to break up into domains. These considerations require that the sensing element is accurately positioned on the support so that on the one hand the sensing element is close enough accurately to create the electrical signal during read back, and on the other hand not so close to the edge of the support that it is recessed insufficiently.

Another problem if the sensor is located too close to the edge of the carrier is that adjacent data tracks in the medium will be sensed by the sensor, and this cross talk will reduce the accuracy with which the sensor can reproduce the magnetic pattern in the selected track. By recessing the sensor slightly, the pole(s) serve as a flux path in conducting flux from the medium and the desired track therein to the sensor, at least partly to the exclusion of cross talk from adjacent tracks. Recessing thus alleviates the cross talk problem, but reduces the signal strength and makes the sensor more vulnerable to other noise sources.

It has now been discovered that very small deviations from perfect straightness of the sensing element will not necessarily break it up into domains. In particular, the interference caused by cross talk or other stray flux of such a magneto-resistive flux sensing element can be improved by adding to it a projection extending towards the bearing surface. It has been found that such a projection should have a width less than the pre-selected width of the deposited pole and a length dimension normal to the plane of the bearing surface no greater than approximately 1.5 micron. Even though such a projection is a deviation from nearly perfect straightness of the sensing element's structure, the dimensional limitation has been found to be sufficient to prevent the sensing element from breaking up into domains. If the projection exceeds the 1.5 micron limitation appreciably, the the break up of the sensing element into domains is observed. Preferably, the end of the projection is substantially flush with the bearing surface. This geometry will typically be created by the lapping process which sets the flux gap dimensions. Even though the projection is very short, producing it is well within the capacity of photo-lithographic processes.

Thus, according to the present invention there is provided a thin film magnetic data transducer having, for writing, at least one deposited magnetic pole of preselected width projecting towards and approximately flush with a bearing surface of the transducer along which, during use, a magnetic medium for recording magnetic flux patterns moves; a deposited winding encircling the pole for carrying write current and generating write flux thereby; and a magneto-resistive flux sensing element underlying the deposited pole in width wise direction for reading data encoded in previously written magnetic data patterns on the medium the flux sensing element comprising a single domain at the sensing area, characterised in that the flux sensing element has, under the deposited pole, a projection extending towards the bearing surface, said projection having a width less than the width of the deposited pole and a length dimension normal to the plane of the bearing surface no greater than approximately 1.5 microns.

Preferably the width of an end of the projection is less than a base of the projection.

The projection may taper towards its end.

The end of the projection preferably is substantially flush with the bearing surface.

By placing the edge of the projection flush with the bearing surface, or at least closer to the bearing surface than was possible heretofore, higher data densities and data rates are possible. Further, cross talk from adjacent tracks is reduced, and the effects of scratching of the sensor edge during lapping is reduced due to the lesser amount of sensor width exposed to the lap. This increases the capacity of a storage device employing this type of sensor at essentially no additional increase in price.

The invention is illustrated, merely by way of example, in the accompanying drawings, in which:-
Figure 1 is a front view of part of a thin film magnetic data transducer according to the present invention; and
Figure 2 is a sectional view on the line 2 - 2 of the transducer shown in Figure 1.

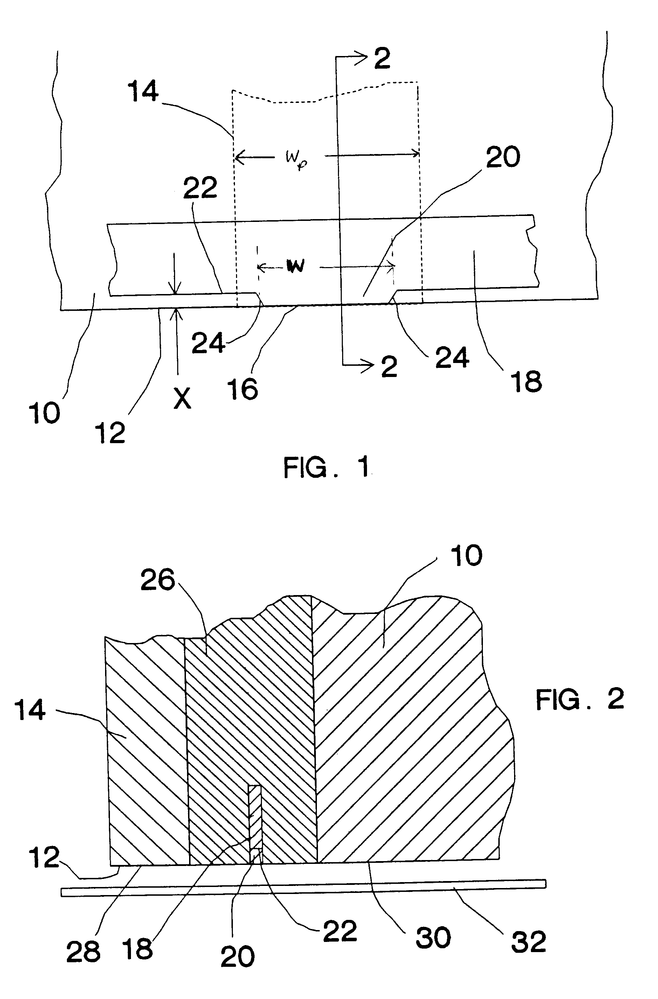

In Figure 1, there is shown part of a thin film magnetic data transducer according to the present invention. A bearing surface 12 is formed, for example, by lapping or other machining process on a carrier 10. The carrier 10 may be formed of magnetic ferrite material. A magneto-resistive flux sensing element 18 is firmly attached to a face of the carrier 10, and preferably is formed by a photo-lithographic process. A photo-lithographically deposited magnetic pole 14, shown in outline, overlies a part of the sensing element 18. The pole 14 is flush with the bearing surface 12. The "length" of the sensing element 18 (dimension normal to the plane of the paper in Figure 1) is typically 0.01 to 0.1 micron and the height, as shown in Figure 1, may be usually from 4 to 20 micron.

A projection 20 integral with the sensing element 18 underlies the pole 14. The projection 20 has a length indicated as X, the distance between an edge 22 of the sensing element 18 and an end 16 of the projection 20, where X must not appreciably exceed 1.5 micron. The width W of the projection 20 should be less than the width Wₚ of the pole 14. Because of limitations of the photo-lithgraphic process, it is not possible to make the sides 24 of the projection 20 perpendicular to the edge 22. Accordingly, the end 16 of the projection 20 is narrower than the base of the projection 20.

Note that in Figure 2 the length of the sensing element 18 is not shown to scale. The flux gap for writing data on a medium 32 e.g. a magnetic recording disk, is established between a face 30 of the carrier 10 and a face 28 of the pole 14 with an insulating layer 26 filling the gap therebetween and mechanically spacing the pole 14 from the carrier 10. The edge 22 is shown as a solid line because of space limitations although strictly speaking since the edge 22 is hidden in the sectional view of Figure 2, it should be a dashed line.

Of course, one or more poles can be deposited on the pole 14 with an appropriate gap material therebetween. In this case, the sensing element 18 can be left in the position shown between the pole 14 and the carrier 10, or it can be located in the gap material between any two magnetically active poles, for example, the pole 14 and the pole proposed to be deposited immediately adjacent the pole 14. How ever the structure is configured, it is important for high bit density reading and recording on the medium 32 that the sensing element 18 has magnetic material on each of its sides. This is to prevent peak shift caused by interference from bits adjacent the one presently under the sensing element 18.

The insulating layer 26 serves electrically to insulate and physically to space the pole 14 from the carrier 10 so as to create the gap mentioned. The insulating layer 26 typically comprises several individual layers formed by several steps in the fabrication process. Because the individual insulating layers are not relevant to the understanding of the present invention, they have not been differentiated in Figure 2.

## Claims

1. A thin film magnetic data transducer having, for writing, at least one deposited magnetic pole (14) of preselected width projecting towards and approximately flush with a bearing surface (12) of the transducer along which, during use, a magnetic medium (32) for recording magnetic flux patterns moves; a deposited winding encircling the pole for carrying write current and generating write flux thereby; and a magneto-resistive flux sensing element (18) underlying the deposited pole (14) in the width wise direction of the pole for reading data encoded in previously written magnetic data patterns on the medium the flux sensing element comprising a single domain at the sensing area, characterised in that the flux sensing element (18) has, under the deposited pole (14), a projection (20) extending towards the bearing surface (12), said projection (20) having a width (W) less than the width (Wₚ) of the deposited pole (14) and a length dimension (X) normal to the plane of the bearing surface no greater than approximately 1.5 microns.

2. A transducer as claimed in claim 1 characterised in that the width of an end of the projection (20) is less than a base of the projection.

3. A transducer as claimed in claim 2 characterised in that the projection tapers in width towards its end.

4. A transducer as claimed in any preceding claim characterised in that the end of the projection (20) is substantially flush with the bearing surface (12).

## Patentansprüche

1. Magnetischer Datenwandler vom Dünnschichttyp, der für den Schreibvorgang zumindestens einen durch Abscheidung hergestellten Magnetpol (14) mit vorausgewählter Breite aufweist, der in Richtung auf eine Lageroberfläche (12) des Wandlers vorspringt und angenähert glatt mit dieser Oberfläche abschließt, entlang der sich im Betrieb ein magnetisches Medium (32) zur Aufzeichnung von magnetischen Magnetflußmustern bewegt, wobei eine durch Abscheidung hergestellte Wicklung den Pol umgibt, um einen Schreibstrom zu führen und um hierdurch einen Schreibmagnetfluß zu erzeugen, und wobei ein magneto-resistives Magnetfluß-Sensorelement (18) unter dem durch Abscheidung hergestellten Pol (14) in Breitenrichtung des Pols liegt, um Daten zu lesen, die in vorher geschriebenen magnetischen Datenmustern auf dem Medium codiert sind, wobei das Magnetfluß-Sensorelement in dem Meßbereich eine einzige magnetische Domäne aufweist,
dadurch gekennzeichnet, daß das Magnetfluß-Sensorelement (18) unter dem durch Abscheidung hergestellten Pol (14) einen Vorsprung (20) aufweist, der sich in Richtung auf die Lageroberfläche (12) erstreckt, wobei dieser Vorsprung (20) eine Breite (W), die kleiner als die Breite (Wₚ) des durch Abscheidung hergestellten Pols (14) ist, und eine Längenabmessung (X) senkrecht zur Ebene der Lageroberfläche aufweist, die nicht größer als ungefähr 1,5 Mikrometer ist.

2. Wandler nach Anspruch 1,
dadurch gekennzeichnet, daß die Breite eines Endes des Vorsprunges (20) größer als die einer Basis des Vorsprunges ist.

3. Wandler nach Anspruch 2,
dadurch gekennzeichnet, daß sich der Vorsprung in seiner Breite in Richtung auf sein Ende verjüngt.

4. Wandler nach einem der vorhergehenden Ansprüche,
dadurch gekennzeichnet, daß das Ende des Vorsprunges (20) im wesentlichen glatt mit der Lageroberfläche (12) abschließt.

## Revendications

1. Transducteur de données magnétiques à film mince ayant, pour l'écriture, au moins un pôle magnétique déposé (14) d'une largeur présélectionnée, qui fait saillie vers une surface de portée (12) du transducteur et est approximativement de niveau avec cette surface de portée, le long de laquelle un milieu magnétique (32) destiné à enregistrer des dessins de flux magnétique défile en utilisation ; un enroulement déposé qui encercle le pôle pour transporter un courant d'écriture et engendrer de cette façon un flux d'écriture ; et un élément capteur de flux à magnéto-résistance (18), situé sous le pôle déposé (14), dans la direction de la largeur, et destiné à lire les données codées dans les dessins de données magnétiques précédemment écrits sur le milieu, l'élément capteur de flux comprenant un unique domaine dans la région de captage, caractérisé en ce que l'élément capteur de flux (18) possède, sous le pôle déposé (14), une saillie (20) qui s'étend vers la surface de portée (12), ladite saillie (20) ayant une largeur (W) inférieure à la largeur (Wp) du pôle déposé (14) et une dimension en longueur (X), normalement au plan de la surface de portée, non supérieure à environ 1,5 micron.

2. Transducteur selon la revendication 1, caractérisé en ce que la largeur de l'extrémité de la saillie (20) est inférieure à celle de la base de la saillie.

3. Transducteur selon la revendication 2, caractérisé en ce que la saillie décroît en largeur vers son extrémité.

4. Transducteur selon une quelconque des revendications précédentes, caractérisé en ce que l'extrémité de la saillie (20) est sensiblement de niveau avec la surface de portée (12).
